# EUROPÄISCHE PATENTANMELDUNG

(11) **EP 2 806 539 A1**
(43) Veröffentlichungstag der Anmeldung: **26.11.2014**
(21) Anmeldenummer: 13168541.4
(22) Anmeldetag: 21.05.2013
(51) Int. Cl.: H02K 1/28, H02K 17/16, H02K 7/00

(54) **Aktivteil und modularer Rotor für eine elektrische Maschine**

(71) Anmelder: Siemens Aktiengesellschaft, 80333 München (DE)
(72) Erfinder: Kümmlee, Horst, 13505 Berlin (DE)

(57) **Zusammenfassung**

Die Erfindung betrifft einen Aktivteil (1) für einen Rotor einer elektrischen Maschine, wobei der Aktivteil (1) mittels heißisostatischem Pressen hergestellt ist, einen modularen Rotor und eine elektrische Maschine. Um einen Aktivteil (1) bzw. einen Rotor für eine elektrische Maschine bereitzustellen, welcher für vergleichsweise hohe Drehzahlen geeignet ist und eine höhere Leistung erreichen kann, wird vorgeschlagen, dass der Aktivteil (1) an zumindest einem seiner beiden axialen Enden einen als Schraube oder als Mutter ausgeführten Bereich (2, 3) aufweist, mittels welchem der Aktivteil (1) jeweils anhand einer Schraubverbindung mit einem axialen Ende einer Welle (4, 5) drehfest verbindbar ist.

## Beschreibung

Die Erfindung betrifft einen Aktivteil, wobei der Aktivteil mittels heißisostatischem Pressen hergestellt ist, einen modularen Rotor und eine elektrische Maschine.

Üblicherweise weisen Rotoren von elektrischen Maschinen eine axiale Welle sowie einen Aktivteil auf, welcher drehfest mit der Welle verbunden ist. Zur Fertigung von Rotoren, welche mittels eines HIP-Verfahrens (heißisostatisches Pressen, englisch: "Hot Isostatic Pressing") hergestellt werden, wird eine Fertigungseinrichtung benötigt, die bei ca. 1000°C und 1000 bar Überdruck eine Kupfer-Kurzschlusswicklung mit dem Stahlkörper des Rotors stoffschlüssig verbindet. Weil diese stoffschlüssige Verbindung eine hohe mechanische Integrität ermöglicht, sind derartige Rotoren besonders geeignet für elektrische Maschinen mit vergleichsweise hohen Drehzahlen.

Die zur Durchführung eines HIP-Verfahrens benötigten Einrichtungen sind recht aufwändig, wobei beispielsweise druckfeste Öfen zum Einsatz kommen, und sind zurzeit nur in Längen bis ca. 3 m verfügbar. Dadurch sind die realisierbaren Baugrößen insbesondere bei Rotorausführungen mit Wellenlüftern stark eingeschränkt.

Aus der DE 10 2009 040 123 A1 ist eine elektrische Maschine mit einem Rotor bekannt, der einen mittels eines HIP-Prozesses hergestellten Aktivteil aufweist, der anhand von Schweißverbindungen mit stirnseitig angeordneten Wellenenden verbunden ist.

Der Erfindung liegt die Aufgabe zugrunde, einen Aktivteil bzw. einen Rotor für eine elektrische Maschine bereitzustellen, welcher für vergleichsweise hohe Drehzahlen geeignet ist und eine höhere Leistung erreichen kann.

Diese Aufgabe wird bei einem Aktivteil der eingangs genannten Art dadurch gelöst, dass der Aktivteil an zumindest einem seiner beiden axialen Enden einen als Schraube oder als Mutter ausgeführten Bereich aufweist, mittels welchem der Aktivteil jeweils anhand einer Schraubverbindung mit einem axialen Ende einer Welle drehfest verbindbar ist.

Weiterhin wird diese Aufgabe durch einen Rotor der eingangs genannten Art dadurch gelöst, dass der Rotor einen erfindungsgemäßen Aktivteil, ein erstes Wellenendstück, welches an einem ersten axialen Ende des Aktivteils angeordnet ist, und ein zweites Wellenendstück aufweist, welches an einem zweiten axialen Ende des Aktivteils angeordnet ist, wobei das erste Wellenendstück und der Aktivteil mittels einer ersten Schraubverbindung verbunden sind und das zweite Wellenendstück und der Aktivteil mittels einer zweiten Schraubverbindung verbunden sind.

Der als Schraube ausgeführte Bereich des Aktivteils weist dabei ein Außengewinde auf, auf welches das axiale Ende einer Welle mit einem Innengewinde aufgeschraubt werden kann. Entsprechend weist der als Mutter ausgeführte Bereich ein Innengewinde auf, in welches das axiale Ende einer Welle mit einem Außengewinde eingeschraubt werden kann. Dabei kann die jeweilige Schraubverbindung mechanisch lösbar ausgeführt werden.

Der erfindungsgemäße Aktivteil bietet gegenüber herkömmlichen Aktivteilen und herkömmlichen elektrischen Maschinen eine Reihe wichtiger Vorteile, insbesondere da erfindungsgemäß elektrische Maschinen mit größeren Baugrößen ermöglicht werden. Dies liegt insbesondere daran, dass sich der Längenbedarf für den HIP-Prozess auf den Aktivteil reduziert, was die Ausführbarkeit größerer Rotoren und somit größerer elektrische Maschinen erlaubt.

Die Ausführbarkeitsgrenze für Maschinen orientiert sich üblicherweise an den Fertigungseinrichtungen, so dass z.B. eine selbstbelüftete Ausführung mit Wellenlüftern durch eine kürzere, fremdbelüftete Ausführung ersetzt werden kann. Diese Ausführung birgt jedoch zusätzliche Ausfallrisiken durch die Zusatzaggregate für die Fremdkühlung. Die erfindungsgemäße elektrische Maschine wird dabei mit einem mittels eines HIP-Verfahrens hergestellten Aktivteils ausgeführt, welches die für die verfügbaren druckdichten Öfen größtmöglichen Abmessungen aufweist und somit die größtmögliche Leistung erreichen kann. Gleichzeitig kann diese elektrische Maschine selbstbelüftet ausgeführt werden, indem der Aktivteil mit zwei Wellenendstücken jeweils mittels einer Schraubverbindung zu einem Rotor verbunden wird und zumindest eines der Wellenendstücke Lüfterblätter aufweist. Somit kann also eine sehr leistungsstarke und kompakte elektrische Maschine gebaut werden, welche besonders für hohe Drehzahlen geeignet ist und dadurch, dass sie selbstbelüftet ist, ein geringeres Ausfallrisiko aufweist.

Gegenüber einer Verbindung des Aktivteils mit den Wellenendstücken mittels normaler Flanschverschraubungen weist die erfindungsgemäße Schraubverbindung den Vorteil auf, dass die Flanschverbindung eine erhebliche Durchmesserdifferenz des jeweiligen Wellenendes zum Aktivteil erfordert, damit die Schraubenköpfe der Flanschverbindung untergebracht werden können. Beim erfindungsgemäßen Aktivteil entfällt diese Einschränkung bezüglich der Durchmesserdifferenz.

Der erfindungsgemäße Aktivteil und der erfindungsgemäße Rotor bzw. das zu Grunde liegende Konstruktionsprinzip decken dabei insbesondere den Übergangsbereich ab, in welchem einerseits die Rotoren für den HIP-Ofen zu lang werden und in welchem andererseits der radiale Bauraum ein konventionelles Anflanschen der Wellenenden nicht zulässt.

Anstelle der vorgeschlagenen Schraubverbindung des erfindungsgemäßen Aktivteils wäre prinzipiell auch das Anschweißen der Wellenendstücke mittels geeigneter Dünnspaltschweißverfahren denkbar. Bei der Schweißverbindung ist allerdings problematisch, dass die Wärmebehandlungen zum Schweißen und zur Sicherstellung einer hochfesten HIP-Verbindung konträr laufen. Daher ist eine Schweißverbindung bei einem mittels eines HIP-Verfahrens hergestellten Aktivteils ein Sicherheitsrisiko, denn es besteht die Gefahr, dass sich Teile des Kurzschlusskäfigs vom restlichen Aktivteil lösen könnten. Der erfindungsgemäße Aktivteil bietet somit den Vorteil, diese Gefahr zu verringern bzw. komplett zu bannen.

Durch den erfindungsgemäßen Aktivteil wird das ausführbare Spektrum schnelllaufender Rotoren erweitert, da die Länge der mittels eines HIP-Verfahrens zu fertigenden Bauteile auf die Länge des Aktivteils verkürzt werden kann. Es können Durchmesserdifferenzen realisiert werden, die mit konventionellen Flanschverschraubungen nicht zugänglich sind. Dabei weist die rein mechanische Verspannung der Schraubverbindung Vorteile gegenüber Schweißlösungen bei der Qualitätssicherung auf. Weiterhin ergeben sich Vorteile bei der Reparatur bzw. beim Ersatzteilbedarf des erfindungsgemäßen Rotors, da z.B. bei der Zerstörung eines Wellenendstücks durch einen Lagerschaden der teure Aktivteil erhalten werden. In diesem Fall braucht lediglich das zerstörte Wellenendstück ersetzt werden, wozu die entsprechende Schraubverbindung gelöst wird.

Bei einer vorteilhaften Ausgestaltung der Erfindung weist der Aktivteil einen zumindest teilweise rohrförmigen Grundkörper auf.

Durch den zumindest teilweise rohrförmigen Grundkörper des Aktivteils wird eine verbesserte Abkühlung nach dem HIP-Prozess und damit eine Verbesserung der Festigkeit der Konstruktion ermöglicht. Durch die rohrförmige Gestaltung des Aktivteils kann die optimale Abkühlrate besser eingestellt werden, welche einerseits ausreichend kurz zur Erhaltung der guten Materialeigenschaften und andererseits ausreichend lang zur Vermeidung unzulässiger thermischer Spannungen durch Temperaturgradienten im Bauteil ist.

Bei einer weiteren vorteilhaften Ausgestaltung der Erfindung weist der Aktivteil an seinem ersten axialen Ende einen als Schraube ausgeführten Bereich und an seinem zweiten axialen Ende einen als Mutter ausgeführten Bereich auf.

Diese Ausführung des Aktivteils erlaubt eine besonders wirksame axiale Verspannung des Aktivteils zwischen zwei Wellenendstücken, welche den Aktivteil gleichzeitig radial führen.

Ferner wird die oben genannte Aufgabe durch einen Rotor mit einem mittels heißisostatischem Pressen hergestellten Aktivteil, wobei der Aktivteil einen zumindest teilweise rohrförmigen Grundkörper aufweist, wobei der Rotor ein erstes Wellenendstück, welches an einem ersten axialen Ende des Aktivteils angeordnet ist, und ein zweites Wellenendstück aufweist, welches an einem zweiten axialen Ende des Aktivteils angeordnet ist, dadurch gelöst, dass das erste Wellenendstück und/oder das zweite Wellenendstück zumindest teilweise in den zumindest teilweise rohrförmigen Grundkörper hineinragt, wobei das erste Wellenendstück und das zweite Wellenendstück mittels einer Schraubverbindung verbunden sind, wobei der Aktivteil mittels einer drehfesten und formschlüssigen Verbindung mit dem ersten Wellenendstück und dem zweiten Wellenendstück verbunden ist.

Beispielsweise kann der Grundkörper des Aktivteils eine in axialer Richtung durchgehende Öffnung aufweisen und das erste Wellenendstück oder das zweite Wellenendstück als Zuganker ausgeführt sein, welcher durch diese Öffnung hindurchgeführt wird. Alternativ ist auch denkbar, dass sowohl das erste Wellenendstück als auch das zweite Wellenendstück in die durchgehende Öffnung des Aktivteils hineingeführt werden. Das erste Wellenendstück und das zweite Wellenendstück sind dabei jeweils für eine Schraubverbindung der beiden Wellenendstücke ausgelegt.

Das erste Wellenendstück und das zweite Wellenendstück können dabei Fixierelemente aufweisen, mittels welchen der Aktivteil axial verspannt und damit sowohl in axialer als auch in radialer Richtung fixiert werden kann. Diese Fixierelemente können beispielsweise axial im Anschluss an das Aktivteil am jeweiligen Wellenendstück angeordnet sein und das Aktivteil in radialer Richtung zumindest teilweise überdecken.

Der Aktivteil wird durch die Schraubverbindung des ersten Wellenendstücks mit dem zweiten Wellenendstück in axialer Richtung verspannt. Dadurch entsteht eine drehfeste und formschlüssige Verbindung des Aktivteils mit dem ersten Wellenendstück und dem zweiten Wellenendstück.

Der erfindungsgemäße Rotor ermöglicht wiederum, dass sich der Längenbedarf für den HIP-Prozess auf den Aktivteil reduziert, was die Ausführbarkeit größerer Rotoren und somit größerer elektrische Maschinen erlaubt, wie weiter oben schon ausgeführt.

Bei einer weiteren vorteilhaften Ausgestaltung der Erfindung weist das erste Wellenendstück an seinem, dem zweiten Wellenendstück zugewandten axialen Ende einen als Mutter ausgeführten Bereich auf, wobei das zweite Wellenendstück an seinem, dem ersten Wellenendstück zugewandten axialen Ende einen als Schraube ausgeführten Bereich aufweist.

Der als Mutter ausgeführte Bereich des ersten Wellenendstücks weist dabei ein Innengewinde auf und der als Schraube ausgeführte Bereich des zweiten Wellenendstücks weist ein entsprechendes Außengewinde auf, auf welches das axiale Ende des ersten Wellenendstücks mit dem Innengewinde aufgeschraubt werden kann. Dabei kann die jeweilige Schraubverbindung mechanisch lösbar ausgeführt werden.

Schließlich wird die oben genannte Aufgabe durch eine elektrische Maschine mit einem erfindungsgemäßen Aktivteil oder einem erfindungsgemäßen Rotor gelöst.

Der erfindungsgemäße Aktivteil bzw. der erfindungsgemäße Rotor kommen vorteilhafterweise bei elektrische Maschinen mit einer Leistung von 5-40 MW, insbesondere 10-25 MW, zum Einsatz.

Im Folgenden wird die Erfindung anhand des in den Figur dargestellten Ausführungsbeispiels näher beschrieben und erläutert. Es zeigt:
- FIG 1: ein erstes Ausführungsbeispiel des erfindungsgemäßen Aktivteils und des erfindungsgemäßen Rotors,
- FIG 2: ein zweites Ausführungsbeispiel des erfindungsgemäßen Rotors, und
- FIG 3: ein drittes Ausführungsbeispiel des erfindungsgemäßen Rotors.

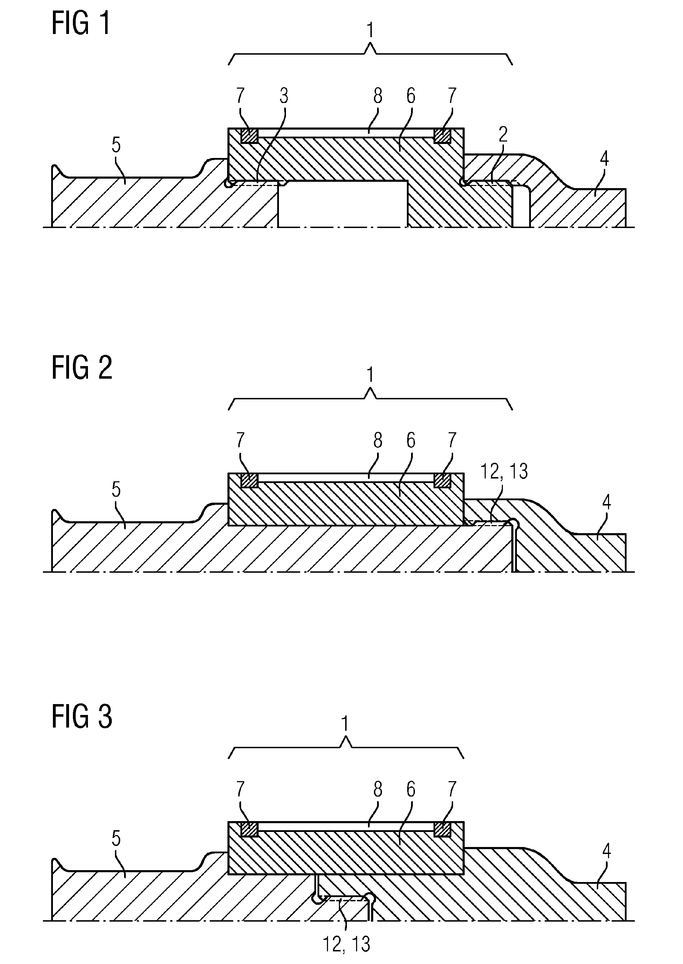

Figur 1 zeigt ein erstes Ausführungsbeispiel des erfindungsgemäßen Aktivteils 1 und des erfindungsgemäßen Rotors. Das Aktivteil 1 weist dabei einen Grundkörper 6, beispielsweise aus Stahl auf, in welchem zwei Kurzschlussringe 7 und Kurzschlussstäbe 8 untergebracht sind. Die Kurzschlussringe 7 und die Kurzschlussstäbe 8 bilden dabei einen Kurzschlusskäfig, welcher beispielsweise aus Kupfer ist und welcher mittels eines HIP-Verfahrens mit dem Grundkörper 6 verbunden ist.

An seinem ersten axialen Ende weist der Aktivteil 1 einen als Schraube ausgeführten Bereich 2 auf, welcher über ein Außengewinde für eine erste Schraubverbindung verfügt. An seinem zweiten axialen Ende weist der Aktivteil 2 einen als Mutter ausgeführten Bereich 3 auf, welche über ein Innengewinde für eine zweite Schraubverbindung verfügt.

Der Rotor weist im Rahmen des Ausführungsbeispiels den Aktivteil 1 sowie ein erstes Wellenendstück 4 und ein zweites Elementstück 5 auf. Dabei ist das erste Wellenendstück 4 am ersten axialen Ende des Aktivteils 1 angeordnet und mittels der ersten Schraubverbindung mit dem Aktivteil 1 drehfest verbunden. Für die erste Schraubverbindung weist der Aktivteil 1 den als Schraube ausgeführten Bereich 2 auf und das Wellenendstück 4 einen dazu passenden, als Mutter bzw. mit Innengewinde ausgeführten Bereich auf.

Entsprechend ist das zweite Wellenendstück 5 am zweiten axialen Ende des Aktivteils 1 angeordnet und mittels der zweiten Schraubverbindung mit dem Aktivteil eins drehfest verbunden. Während der Aktivteil 1 den als Mutter ausgeführten Bereich 3 für die zweite Schraubverbindung aufweist, weist das Wellenendstück 5 einen dazu passenden, als Schraube bzw. mit Außengewinde ausgeführten Bereich auf.

Der Grundkörper 6 des Aktivteils ist teilweise rohrförmig ausgeführt, insbesondere außerhalb des ersten axialen Bereichs 2, welcher als Schraube ausgeführt ist.

Denkbar ist dabei auch lediglich eine Schraubverbindung oder zwei Schraubverbindungen gleichen Typs vorzusehen, so dass der Aktivteil 1 beispielsweise an beiden axialen Enden jeweils einen als Mutter oder einen als Schraube ausgeführten Bereich aufweisen kann. Die Wellenendstücke 4, 5 weisen dann für eine entsprechende Schraubverbindung passende Bereiche auf.

Figur 2 zeigt ein zweites Ausführungsbeispiel des erfindungsgemäßen Rotors. Dabei bezeichnen gleiche Bezugszeichen wie in Figur 1 gleiche Gegenstände. Im Unterschied zum Aktivteil 1 des ersten Ausführungsbeispiels weist das Aktivteil 1 des zweiten Ausführungsbeispiels keinen als Schraube oder als Mutter ausgeführten Bereich auf.

Das Aktivteil 1 ist mit einem rohrförmigen Grundkörper 6 ausgerüstet, durch dessen axiale Öffnung das zweite Wellenendstück 5 hindurchgeführt ist. Zur Verbindung des zweiten Wellenendstücks 5 mit dem ersten Wellenendstück 4 weist das zweite Wellenendstück 5 an seinem, dem ersten Wellenendstück 4 zugewandten axialen Ende einen als Schraube ausgeführten Bereich 12 auf und das erste Wellenendstück 4 an seinem, dem zweiten Wellenendstück 5 zugewandten axialen Ende einen als Mutter ausgeführten Bereich 13 auf.

Der Aktivteil 1 wird durch die Schraubverbindung des ersten Wellenendstücks 4 mit dem zweiten Wellenendstück 5 in axialer Richtung verspannt. Dadurch entsteht eine drehfeste und formschlüssige Verbindung des Aktivteils 1 mit dem ersten Wellenendstück 4 und dem zweiten Wellenendstück 5.

Figur 3 zeigt ein drittes Ausführungsbeispiel des erfindungsgemäßen Rotors. Im Unterschied zum zweiten Ausführungsbeispiel greifen sowohl das erste Wellenendstück 4 als auch das zweite Wellenendstück 5 in die Öffnung des rohrförmigen Grundkörpers 6 des Aktivteils 1 ein, wobei das erste Wellenendstück 4 mit dem zweiten Wellenendstück 5 wiederum mittels einer Schraubverbindung verbunden ist und das Aktivteil 1 mittels einer drehfesten und formschlüssigen Verbindung mit dem ersten Wellenendstück 4 und dem zweiten Wellenendstück 5 verbunden ist.

Zusammenfassend betrifft die Erfindung einen Aktivteil für einen Rotor einer elektrischen Maschine, wobei der Aktivteil mittels heißisostatischem Pressen hergestellt ist, einen modularen Rotor und eine elektrische Maschine. Um einen Aktivteil bzw. einen Rotor für eine elektrische Maschine bereitzustellen, welcher für vergleichsweise hohe Drehzahlen geeignet ist und eine höhere Leistung erreichen kann, wird vorgeschlagen, dass der Aktivteil an zumindest einem seiner beiden axialen Enden einen als Schraube oder als Mutter ausgeführten Bereich aufweist, mittels welchem der Aktivteil jeweils anhand einer Schraubverbindung mit einem axialen Ende einer Welle drehfest verbindbar ist.

## Patentansprüche

1. Aktivteil (1) für einen Rotor einer elektrischen Maschine, wobei der Aktivteil (1) mittels heißisostatischem Pressen hergestellt ist,
**dadurch gekennzeichnet, dass** der Aktivteil (1) an zumindest einem seiner beiden axialen Enden einen als Schraube oder als Mutter ausgeführten Bereich (2, 3) aufweist, mittels welchem der Aktivteil (1) jeweils anhand einer Schraubverbindung mit einem axialen Ende einer Welle (4, 5) drehfest verbindbar ist.

2. Aktivteil nach Anspruch 1,
wobei der Aktivteil (1) einen zumindest teilweise rohrförmigen Grundkörper (6) aufweist.

3. Aktivteil nach einem der vorhergehenden Ansprüche,
wobei der Aktivteil (1) an seinem ersten axialen Ende einen als Schraube ausgeführten Bereich (2) und an seinem zweiten axialen Ende einen als Mutter ausgeführten Bereich (3) aufweist.

4. Rotor für eine elektrische Maschine umfassend
- einen Aktivteil (1) nach einem der vorhergehenden Ansprüche,
- ein erstes Wellenendstück (4), welches an einem ersten axialen Ende des Aktivteils (1) angeordnet ist,
- ein zweites Wellenendstück (5), welches an einem zweiten axialen Ende des Aktivteils (1) angeordnet ist,
wobei das erste Wellenendstück (4) und der Aktivteil (1) mittels einer ersten Schraubverbindung verbunden sind und das zweite Wellenendstück (5) und der Aktivteil (1) mittels einer zweiten Schraubverbindung verbunden sind.

5. Rotor für eine elektrische Maschine umfassend
- einen mittels heißisostatischem Pressen hergestellten Aktivteil (1),
wobei der Aktivteil (1) einen zumindest teilweise rohrförmigen Grundkörper (6) aufweist,
- ein erstes Wellenendstück (4), welches an einem ersten axialen Ende des Aktivteils (1) angeordnet ist,
- ein zweites Wellenendstück (5), welches an einem zweiten axialen Ende des Aktivteils (1) angeordnet ist,
**dadurch gekennzeichnet, dass** das erste Wellenendstück (4) und/oder das zweite Wellenendstück (5) zumindest teilweise in den zumindest teilweise rohrförmigen Grundkörper (6) hineinragt,
wobei das erste Wellenendstück (4) und das zweite Wellenendstück (5) mittels einer Schraubverbindung verbunden sind, wobei der Aktivteil (1) mittels einer drehfesten und formschlüssigen Verbindung mit dem ersten Wellenendstück (4) und dem zweiten Wellenendstück (5) verbunden ist.

6. Rotor nach Anspruch 5,
wobei das erste Wellenendstück (4) an seinem, dem zweiten Wellenendstück (5) zugewandten axialen Ende einen als Mutter ausgeführten Bereich (12) aufweist,
wobei das zweite Wellenendstück (5) an seinem, dem ersten Wellenendstück (4) zugewandten axialen Ende einen als Schraube ausgeführten Bereich (13) aufweist.

7. Elektrische Maschine mit einem Aktivteil (1) nach einem der Ansprüche 1-3 oder einem Rotor nach einem der Ansprüche 4-6.
